# EUROPÄISCHE PATENTSCHRIFT

(11) **EP 1 225 364 B1**
(45) Veröffentlichungstag und Bekanntmachung des Hinweises auf die Patenterteilung: **01.02.2006**
(21) Anmeldenummer: 02000669.8
(22) Anmeldetag: 11.01.2002
(51) Int. Cl.: F16D 65/56

(54) **Nachstellvorrichtung für eine Trommelbremse**
Adjusting device for a drum brake
Dispositif de rattrapage d'usure pour frein à tambour

(30) Priorität: 17.01.2001 DE 10101857; 05.05.2001 DE 10121968
(43) Veröffentlichungstag der Anmeldung: 24.07.2002
(73) Patentinhaber: Continental Teves AG & Co. oHG, 60488 Frankfurt (DE)
(72) Erfinder: Winter, Klaus, 65760 Eschborn (DE)

(56) Entgegenhaltungen:
- EP-A- 0 216 478
- EP-A- 0 907 035
- EP-A- 0 936 375
- WO-A-95/16864
- DE-A- 1 505 657
- US-A- 3 709 334
- US-A- 4 503 949

## Beschreibung

Die Erfindung betrifft eine selbsttätige Nachstellvorrichtung einer Trommelbremse, die als verlängerbare Nachstellstrebe zwischen den Bremsbacken einer Trommelbremse angeordnet ist und demzufolge in der Lage ist einen Reibbelagverschleiß an den Trommelbremsbacken auszugleichen.

Eine derartige Nachstellvorrichtung ist beispielsweise aus der Deutschen Patentschrift DE 30 19 214 C2 bekannt. Die beschriebene Nachstellvorrichtung besitzt eine zwischen den beiden radial aufspreizbaren Bremsbacken angeordnete verlängerbare Nachstellstrebe, die über ein Klinken-Sperrrad-Getriebe verfügt. Eine Nachstellung und damit eine Verlängerung der Nachstellstrebe wird dabei durch Drehung des Sperrrades infolge einer Schwenkbewegung der Nachstellklinke bewerkstelligt. Zur Verhinderung einer übermäßigen Nachstellung bei thermisch stark belasteter Bremse sowie Bremstrommel ist an der Nachstellvorrichtung bzw. insbesondere an der Nachstellklinke ein Bimetallstreifen vorgesehen, der bei Erreichen einer vorbestimmten Temperatur die Nachstellklinke außer Eingriff mit dem Sperrrad bringt und somit eine Nachstellung verhindert. Durch Verhinderung einer übermäßigen Nachstellung bei starker thermischer Belastung wird ein Zuspannen und damit Blockieren der Trommelbremse bei schrumpfender Bremstrommel infolge späterer Abkühlung vermieden. Als ungünstig bei einer derartigen Anordnung erweist sich insbesondere die schwenkbare Befestigung des Nachstellhebels an einer der Bremsbacken. Die Nachstellvorrichtung ist demzufolge nicht als eigenständige Baueinheit handhabbar, was Montagevorgänge an der Trommelbremse unnötig erschwert.

In der EP 0 388 057 A1 ist ferner eine automatische Nachstellvorrichtung beschrieben, die neben zwei mit den Bremsbacken zusammenwirkenden Endteilen ein koaxial angeordnetes Zwischenteil aufweist. Am Zwischenteil ist ein Sperrzahnrad vorgesehen, das mit einer von einer Blattfeder beaufschlagten Klinkenanordnung zusammenwirkt, um eine Nachstellung durch Drehung des Sperrzahnrades zu erreichen. Die genannte Nachstellvorrichtung erfordert eine Vielzahl einzelner Bauteile, die zum Teil nur kostenintensiv hergestellt werden können. Zudem ist das Zusammenwirken der Einzelbauteile unnötig kompliziert.

Ausgehend davon ist die Aufgabe der Erfindung darin zu sehen, eine Nachstellvorrichtung unter Verwendung einfach herstellbarer Einzelkomponenten anzugeben, die als eigenständige Baueinheit montagefreundlich handhabbar ist.

Gelöst wird die Aufgabe durch die Merkmalskombination des Patentanspruchs 1. Danach besitzt die eigenständig handhabbare Nachstellvorrichtung einer Trommelbremse eine zwischen den Bremsbacken angeordnete verlängerbare Nachstellstrebe. Die Nachstellstrebe umfasst ein erstes Strebenteil, das eine Gewindestange mit einem drehbar daran angeordneten Zahnrad aufweist, und ein verschiebbar zum ersten Strebenteil angeordnetes zweites Strebenteil, wobei ein mit dem Zahnrad zusammenwirkendes Stellelement vorgesehen ist. Das Stellelement ist schwenkbar an zumindest einem Strebenteil gelagert und bewirkt bei übermäßigem Reibbelagverschleiß an den Bremsbacken eine Verdrehung des Zahnrades, wodurch sich letztlich die Nachstellstrebe verlängert.

Zur einfachen sowie gleichsam funktionssicheren Umsetzung einer Verschleißnachstellung ist die Schwenkbewegung des Stellelementes an die Relativverschiebung zwischen den Strebenteilen gekoppelt. Bei besonders großem Reibbelagverschleiß während einer Bremsbetätigung verschieben sich die Strebenteile relativ zueinander, wobei die Relativverschiebung in eine Schwenkbewegung des Stellelementes umgesetzt wird. Dadurch wird eine Drehung des Zahnrades bewirkt, was letztlich eine Verlängerung der Nachstellstrebe nach sich zieht. Innerhalb der Nachstellvorrichtung werden die beiden Strebenteile vorteilhaft mittels einer Feder gegeneinander verspannt sind. Damit wird die Verlängerung der Nachstellstrebe im Falle eines übermäßigen Reibbelagverschleißes unterstützt. Eine solche Feder ist vorzugsweise als Druckfeder ausgebildet, die besonders platzsparend zwischen den Strebenteilen angeordnete ist. Damit besteht die Nachstellvorrichtung aus einfach herzustellenden Einzelbauteilen und ist demnach besonders kostengünstig. Ferner ist die Nachstellvorrichtung als eigenständige Baueinheit separat handhabbar. Dies vereinfacht nicht nur die Montage einer derartigen Nachstellvorrichtung sondern erlaubt auch deren vielseitigen Einbau in unterschiedliche Trommelbremsen.

Eine erste bevorzugte Variante der Nachstellvorrichtung ergibt sich dadurch, dass das Stellelement an einem Stift gelagert ist, der in einem die beiden Strebenteile abschnittsweise in seinem Innern aufnehmenden Rohr befestigt ist. Dabei sind die beiden Strebenteile von beiden Seiten in das Rohr eingeschoben. Das Stellelement ist insbesondere als Hebel ausgebildet, der sich beispielsweise aus einem Blechzuschnitt fertigten lässt. Eine solche Ausführung zeichnet sich besonders durch die einfache Gestaltung der einzelnen Bauelemente aus. Dies führt zu einer kostengünstigen Lösung.

Eine weitere Ausführung der Nachstellvorrichtung wird da durch erreicht, dass das Stellelement eine zumindest ein Strebenteil abschnittsweise umgebende Hülse aufweist, die mittels eines an der Hülse befestigten Stiftes in einer Kulissenführung eines der Strebenteile geführt ist. Das mit dem Zahnrad zusammenwirkende Stellelement ist fest mit dem Stift verbunden, der seinerseits bei einer Relativverschiebung der Strebenteile innerhalb einer Kulissenführung bewegt wird. Die Relativverschiebung der Strebenteile wird somit durch einfache Mittel in eine Drehbewegung des Stellelementes umgesetzt. Zur eigentlichen Nachstellung weist das Stellelement einen an der Hülse befestigten Hebel auf, der in das Zahnrad eingreift und dieses in Drehung versetzen kann, um die Nachstellstrebe zu verlängern.

Eine sinnvolle Weiterentwicklung der Nachstellvorrichtung wird dadurch erreicht, dass das Stellelement einen das Zahnrad zumindest teilweise an seinem Umfang umgebenden Arm aufweist, der mit einer Klinke in das Zahnrad eingreift. Eine solche Anordnung bietet Vorteile vor allem hinsichtlich des geringen Bauraumbedarfes.

Eine einfache Möglichkeit der Realisierung einer separat handhabbaren Nachstellvorrichtung sieht vor, dass das Stellelement mit einer Lasche das Zahnrad umgreift, um die Relativverschiebung zwischen den Strebenteilen zu begrenzen. Mittels der Lasche werden die beiden Strebenteile somit verliersicher zusammengehalten, um eine montagefreundliche Baueinheit zu bilden.

Zur Erweiterung der Funktionalität der Nachstellvorrichtung ist vorgesehen, dass in die Nachstellstrebe eine thermische Abschaltvorrichtung integriert ist, die bei Überschreiten einer vorbestimmten Temperaturgrenze eine Verlängerung der Nachstellstrebe verhindert. Dies unterbindet eine unerwünschte Nachstellung im Falle einer starken Erwärmung der Trommelbremse mit daraus resultierender thermischer Aufweitung der Bremstrommel. Vorzugsweise umfasst die thermische Abschaltvorrichtung der Nachstellvorrichtung ein temperaturabhängig wirksames Bimetallelement, das besonders kostengünstig ist und als blechartiges Bauteil flexibel gestaltet werden kann. Selbstverständlich kann analog zu einem Bimetallelement auch ein entsprechend wirksames Thermoelement Verwendung finden, z. B. ein Bauteil aus einem thermischen Memory-Metall bzw. einer Form-Gedächtnis-Legierung. Gemäß einer weiteren Variante der temperaturabhängigen Abschaltvorrichtung ist das Bimetallelement bzw. das Thermoelement in das mit dem Zahnrad zusammenwirkende Stellelement integriert ist. Dies reduziert insgesamt den Bauteilaufwand.

Vorteilhafte Ausführungsbeispiele der Erfindung sind anhand der Figuren dargestellt und werden im folgenden näher erläutert.

Es zeigt:
- Fig.1: mehrere teilweise geschnittene Ansichten einer separat handhabbaren Nachstellvorrichtung in einer ersten Ausführungsform;
- Fig.2: zwei teilweise geschnittene Ansichten einer separat handhabbaren Nachstellstrebe in einer zweiten Ausführungsform;
- Fig.3: zwei teilweise geschnittene Ansichten einer separat handhabbaren Nachstellstrebe in einer dritten Ausführungsform.

Die in den Figuren gezeigten Ausführungen von Nachstellvorrichtungen sind zum Einbau in eine nicht dargestellte Trommelbremse geeignet. Bei einer solchen Trommelbremse sind die einzelnen Bremsenkomponenten innerhalb einer Bremstrommel angeordnet. Im einzelnen enthält die Trommelbremse im wesentlichen zwei Bremsbacken, die zur Bremsbetätigung mittels einer entsprechenden Betätigungsvorrichtung radial aufgespreizt werden können und so in Reibanlage mit der Bremstrommel gebracht werden.

Zur Einhaltung eines annähernd gleichbleibenden Betätigungsweges während einer Bremsbetätigung auch bei fortschreitendem Reibbelagverschleiß erfordert die Trommelbremse eine Nachstellvorrichtung, um den Reibbelagverschleiß entsprechend auszugleichen. Die Nachstellvorrichtung umfasst im wesentlichen eine verlängerbare Nachstellstrebe 1, die zwischen den radial aufspreizbaren Bremsbacken angeordnet ist und mittels gabelförmiger Endabschnitte 2 verdrehfest an diesen abgestützt ist. Bei zunehmendem Reibbelagverschleiß wird durch die Nachstellvorrichtung die Nachstellstrebe 1 verlängert, so dass der Betätigungsweg der Bremsbacken nahezu konstant bleibt.

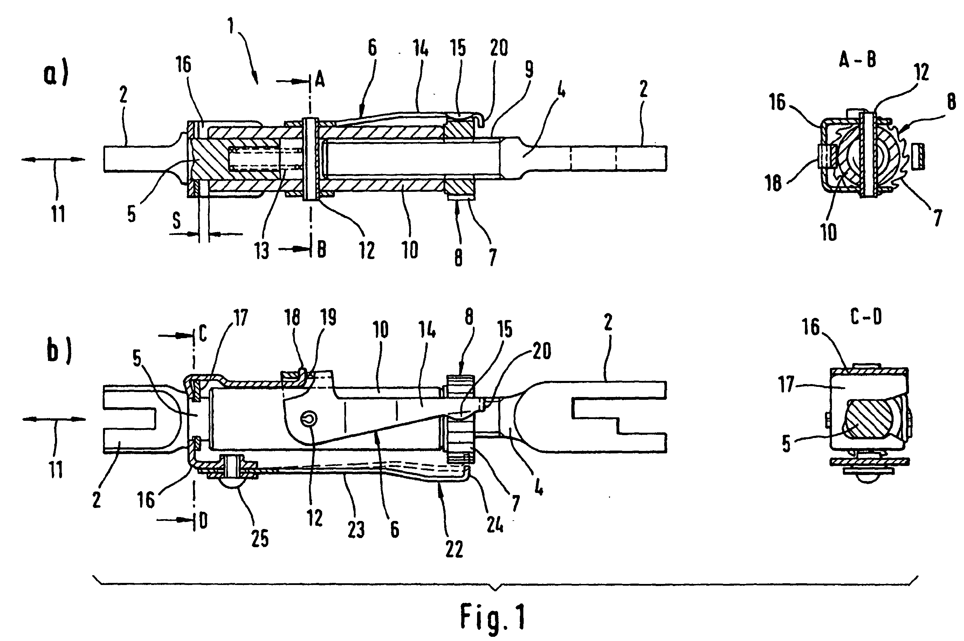

Die Nachstellstrebe 1 gemäß Figur 1 umfasst zwei relativ gegeneinander verschiebbare Strebenteile 4, 5, an denen jeweils die gabelförmigen Endabschnitte 2 zur Anlage an den nicht gezeigten Bremsbacken angeformt sind. Die gabelförmigen Endabschnitte 2 sorgen für einen verdrehfesten Halt der Strebenteile 4, 5 an den Bremsbacken. Das erste Strebenteil 4 besitzt einen Gewindestange 9, an dem über das Gewinde ein Zahnrad 8 mit einer Außenverzahnung 7 drehbar angeordnet ist. Über ein Rohr 10 stützt sich das Zahnrad 8 in Verlängerungsrichtung 11 der Nachstellstrebe 1 am zweiten Strebenteil 5 ab, wobei sich die beiden Strebenteile 4, 5 zumindest abschnittsweise im Innern des Rohres 10 erstrecken. Die beiden Strebenteile 4, 5 werden mittels einer Feder 13, insbesondere einer Druckfeder, gegeneinander verspannt. Dazu ist die Feder 13 äußerst platzsparend in Innern des Rohres 10 untergebracht. Im Rohr 10 ist ferner ein Haltestift 12 befestigt, der beispielsweise als Spannstift ausgebildet ist und sich senkrecht zur Rohrachse erstreckt. Am Haltestift 12 ist ein Stellelement 6 schwenkbar gelagert, das zur Nachstellung mit dem Zahnrad 8 zusammenwirkt. Dazu weist das Stellelement 6 einen Hebel 14 auf, der über eine Klinke 15 in die Außenverzahnung 7 des Zahnrades 8 eingreift. Über eine Schwenkbewegung des Stellelementes 6 kann somit das Zahnrad 8 in einer Richtung gedreht werden. Um das Zahnrad 8 nur in einer Drehrichtung zu beaufschlagen, wodurch gleichsam eine Verlängerung de Nachstellstrebe 1 bewirkt wird, ist die Außenverzahnung 7 vorzugsweise sägezahnförmig ausgebildet.

Das Stellelement 6 steht außerdem mit einem Halter 16 in Verbindung, der verdrehfest am zweiten Strebenteil 5 befestigt ist. Der Halter 16 ist im wesentlichen U-förmig um ein Ende des Rohres 10 herumgeführt insbesondere über einen elastischen Halteclip 17 gegen Verdrehen am Strebenteil 5 gesichert. Dabei ist der gabelförmige Halteclip 17 in zwei zugehörige Schlitze am zweiten Strebenteil 5 formschlüssig eingeschoben und verriegelt. An seiner Außenseite liegt der Halteclip 17 formschlüssig bzw. nahezu spielfrei an der Innenseite des Halters 16 an. Damit werden Halteclip 17 und Halter 16 verdrehfest sowie in Verlängerungsrichtung 11 verschiebesicher am zweiten Strebenteil 5 fixiert. Mit einem hakenförmigen Schenkel 18 greift der Halter 16 in eine entsprechende Öffnung 19 am Stellelement 6 ein, wodurch die Schwenkbewegung des Stellelementes 6 an die Relativverschiebung zwischen den Strebenteilen 4, 5 gekoppelt ist. Ferner bewirkt der in die Öffnung 19 eingreifende hakenförmige Schenkel 18 den Zusammenhalt zwischen dem zweiten Strebenteil 5 und dem Rohr 10 entgegen der Kraft der Druckfeder 13. Das erste Strebenteil 4 ist über eine an den Stellhebel 14 angeformte hakenförmige Lasche 20, die das Zahnrad 8 umgreift, verliersicher am Rohr 10 fixiert. Dadurch bildet die Nachstellstrebe 1 eine eigenständige Baueinheit, die vor allem montagefreundlich gehandhabt werden kann, z. B. als separates Ersatzteil.

Im folgenden wird die eigentliche Nachstellfunktion genauer erläutert. Grundsätzlich ist die Nachstellstrebe 1 im eingebauten Zustand innerhalb einer Trommelbremse zwischen Bremsbacken eingespannt. Dabei wird die Nachstellstrebe 1 durch die Kraft wenigstens einer an den Bremsbacken eingehangenen starken Zugfeder zusammengedrückt. Dieser Zugfederkraft wirkt die Druckfeder 13 in Innern der Nachstellstrebe 1 entgegen. Die Druckfeder ist somit bestrebt, die beiden Strebenteile 4, 5 auseinander zu drücken. Die Druckfeder 13 stützt sich einerseits am zweiten Strebenteil 5 und andererseits am im Rohr 10 befestigten Haltestift 12 ab. Dabei sind die beiden Strebenteile 4, 5 zueinander sowie jeweils gegenüber dem Rohr 10 in Verlängerungsrichtung 11 verschiebbar angeordnet. Allgemein können die beiden Strebenteile 4, 5 um den Betätigungshub S relativ zueinander verschoben werden. Während einer Bremsbetätigung, d. h beim radialen Aufspreizen der Bremsbacken werden die beiden Strebenteile 4, 5 durch die Kraft der Druckfeder 13 auseinandergedrückt und versuchen jeweils der Spreizbewegung der Bremsbacken zu folgen. Bezogen auf die Nachstellstrebe 1 nach Figur 1 wirkt die Druckfeder 13 auf den Haltestift 12 bzw. auf das Rohr 10. Das Rohr 10 stützt sich seinerseits am auf dem ersten Strebenteil 4 angeordneten Zahnrad 8 ab. Infolge der Relativverschiebung zwischen den Strebenteilen 4, 5 während einer Bremsbetätigung wird das Rohr 10 gegenüber dem zweiten Strebenteil 5 um den Betätigungshub S verschoben. Gleichsam wird das Stellelement 6 über den hakenförmigen Schenkel 18 in eine Schwenkbewegung um den Haltestift 12 versetzt, da der Halter 16 verschiebefest am zweiten Strebenteil 5 und der Haltestift 12 unbeweglich am Rohr 10 befestigt ist, ist der Betätigungshub S ausreichend groß, insbesondere infolge starken Reibbelagverschleißes, so wird der Hebel 14 des Stellelementes 6 so weit geschwenkt, dass die Klinke 15 des Hebels 14 um wenigstens eine Zahnteilung der sägezahnförmigen Außenverzahnung 7 rutscht. Nach erfolgter Bremsbetätigung wird die Nachstellstrebe 1 durch die Kraft der an den Bremsbacken eingehangenen Zugfedern zusammengedrückt, so dass der Betätigungshub S bis auf Null zurückgeht. Dadurch wird der Hebel 14 in seine Ruhestellung zurückgeschwenkt und nimmt über die Klinke 15 sowie die Außenverzahnung 7 das Zahnrad entsprechend mit. Im Falle einer Nachstellung wird also das Zahnrad 8 auf dem Gewindestange 9 schrittweise verdreht, was insgesamt eine schrittweise Verlängerung der Nachstellstrebe 1 bewirkt. Grundsätzlich ist es dabei möglich die eigentliche Nachstellung, d. h. die Drehung des Zahnrades 8, entweder während des Zuspannens oder aber des Lösens der Trommelbremse durchzuführen. Dabei ist es jeweils erforderlich, dass die beiden Strebenteile 4, 5 um den Betätigungshub S auseinandergedrückt werden und anschließend wieder zusammengeschoben werden. Nähere allgemeine Details zu einer verlängerbaren Nachstellstrebe 1 mit einem Schrittschaltwerk umfassend ein Zahnrad 8, einen Gewindestange 9 und einen Nachstellhebel 14 mit Klinke 15 können beispielsweise aus den bereits zitierten Dokumenten entnommen werden.

Zur Vermeidung einer übermäßigen Nachstellung im Falle einer starken thermischen Belastung der Trommelbremse weist die Nachstellstrebe 1 nach Figur 1 eine thermische Abschaltvorrichtung 22 auf. Allgemein weitet sich bei starker Erwärmung der Trommelbremse die Bremstrommel auf, was zu großen Betätigungswegen der Bremsbacken führt. Demzufolge wäre in solchen Fällen die Nachstellstrebe 1 geneigt, dies durch eine Verlängerung der Nachstellstrebe 1 auszugleichen. Nach erfolgter Abkühlung der Trommelbremse könnte diese übermäßige Nachstellung eine unerwünschte Blockade der Trommelbremse bewirken. Demzufolge wird die Nachstellfunktion bei starker Erwärmung der Trommelbremse außer Kraft gesetzt bzw. abgeschaltet. Dazu umfasst die Abschaltvorrichtung 22 ein temperaturabhängig wirksames Thermoelement 23, vorzugsweise aus Bimetall oder einer Form-Gedächtnis-Legierung, das sich bei Erreichen einer vorbestimmten Temperaturänderung verformt und nach Beendigung der Temperaturschwankung wieder die Ursprungsform annimmt. Das Thermoelement 23 ist in einer ersten Ausführung nach Figur 1 einseitig am Halter 16 befestigt und besitzt gegenüberliegend einen im Bereich des Zahnrades 8 einen abgewinkelten Endabschnitt 24. Die Befestigung am Halter 16 erfolgt mittels eines Niets 25 bzw. mittels einer vergleichbaren Befestigungsverbindung, z. B. Schraub-, Kleb-, Schweiß-, Lötverbindung etc.. Weiterhin ist es möglich das Thermoelement 23 am zweiten Strebenteil 5 zu fixieren.

Figur 1 zeigt den Zustand des Thermoelementes 23 bei Normaltemperatur, in dem das Thermoelement 23 sich im Abstand entlang der Nachstellstrebe 1 erstreckt und der abgewinkelte Endabschnitt 24 sich im Bereich des Zahnrades 8 befindet. Bei zunehmender Temperatur bzw. bei überschreiten einer vorbestimmten Temperaturschwelle verformt sich das Thermoelement 23 auf die Nachstellstrebe 1 zu, wobei sich der abgewinkelte Endabschnitt 24 dem Zahnrad 8 nähert, wie auch in gestrichelter Linienführung in Figur 1 dargestellt. Bei unbetätigter Trommelbremse im Falle hoher Temperatur, d. h. bei zusammengedrückter Nachstellstrebe 1 und S = 0, hintergreift der abgewinkelte Endabschnitt 24 das Zahnrad 8 und kann so ein Auseinanderspreizen der beiden Strebenteile 4, 5 um den Betätigungshub S verhindern. Der für eine Nachstellung erforderliche Betätigungshub S kann also nicht entstehen. Eine Verlängerung der Nachstellstrebe 1 bei hohen Temperaturen der Trommelbremse wird demzufolge wirkungsvoll unterbunden. Die Nachstellfunktion der Nachstellstrebe 1 wird nur unterhalb der vorbestimmten Temperaturschwelle gestattet.

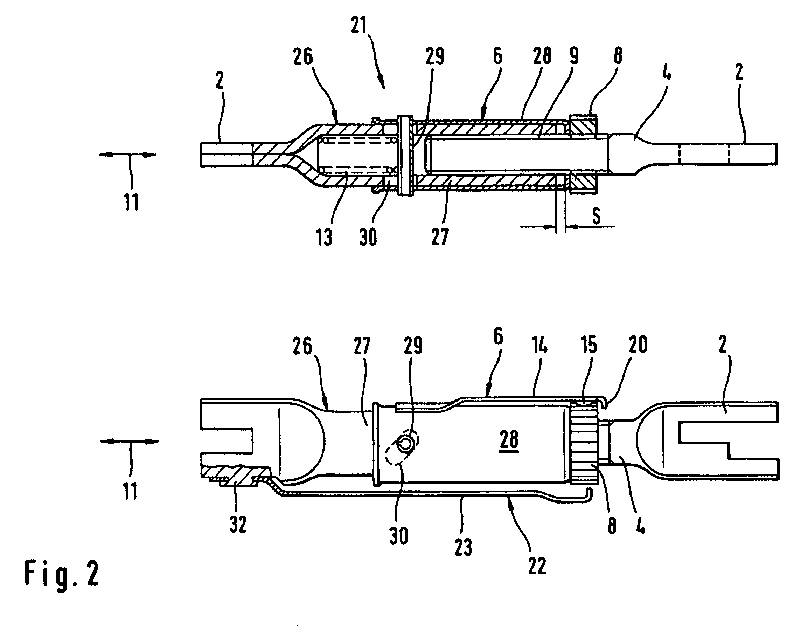

Figur 2 zeigt eine zweite Ausführungsform der Nachstellstrebe 21 mit zwei relativ zueinander verschiebbaren Strebenteilen 4, 26, wobei das zweite Strebenteil 26 neben einem gabelförmigen Endabschnitt 2 einen den Gewindestange 9 des ersten Strebenteiles 4 umgebenden Rohrabschnitt 27 aufweist. Das Stellelement 6 umfasst hier neben dem Hebel 14 mit Klinke 15 eine den Rohrabschnitt 27 umgebende Hülse 28, an der der mit dem Zahnrad 8 zusammenwirkende Hebel 14 befestigt ist. An der Hülse 28 ist ferner ein Führungsstift 29 befestigt, der sich quer zur Verlängerungsrichtung 11 durch die Hülse 28 und durch den Rohrabschnitt 27 erstreckt. Dabei wird der Führungsstift 29 mit Spiel in einer im Rohrabschnitt 27 angeformten Kulissenführung 30 geführt, die beispielsweise als bezogen auf die Längsachse der Nachstellstrebe 1 schräges Langloch ausgebildet ist. Die bereits in Figur 1 gezeigte Druckfeder 13 ist auch bei der Nachstellstrebe 21 nach Figur 2 im Innern des Rohrabschnittes 27 platzsparend untergebracht. Die Feder 13 ist dabei zwischen dem zweiten Strebenteil 26 und der Hülse 28 verspannt. Dadurch wird die Hülse 28 gegen das Zahnrad 8 am ersten Strebenteil 4 gedrückt.

Die Kulissenführung 30 ist derart ausgebildet, dass bei einer Relativverschiebung der beiden Strebenteile 4, 26 um den Betätigungshub S der Führungsstift 29 sowie die Hülse 28 nicht nur eine Bewegung in Verlängerungsrichtung 11 sondern vielmehr auch eine Drehung um die Achse der Nachstellstrebe 1 ausführen. Damit wird auch der an der Hülse 28 befestigte Hebel 14 in Drehung versetzt und kann durch Eingriff in das Zahnrad 8 dieses in bekannter Weise zur Nachstellung schrittweise verdrehen. Wie bereits erwähnt kann die eigentliche Nachstellung, d. h. die schrittweise Drehung des Zahnrades 8 grundsätzlich sowohl während der Bremsbetätigung als auch beim Lösen der Trommelbremse erfolgen.

Um die gesamte Nachstellstrebe 1 als separate Baueinheit zusammenzuhalten, ist der Stellhebel 14 mit der hakenförmigen Lasche 20 versehen, die das Zahnrad 8 umgreift und so ein Auseinanderfallen der Nachstellstrebe 1 verhindert.

Als thermische Abschaltvorrichtung 22 der Nachstellvorrichtung ist analog zu Figur 1 ein streifenförmiges Thermoelement 23 vorgesehen. Im Unterschied zu Figur 1 ist das Thermoelement 23 nach Figur 2 mittels einer Vernietung 32 unmittelbar am zweiten Strebenteil 26 befestigt. Ansonsten ist sowohl die Gestaltung als auch die Funktionsweise des Thermoelementes wie bereits oben anhand von Figur 1 erläutert.

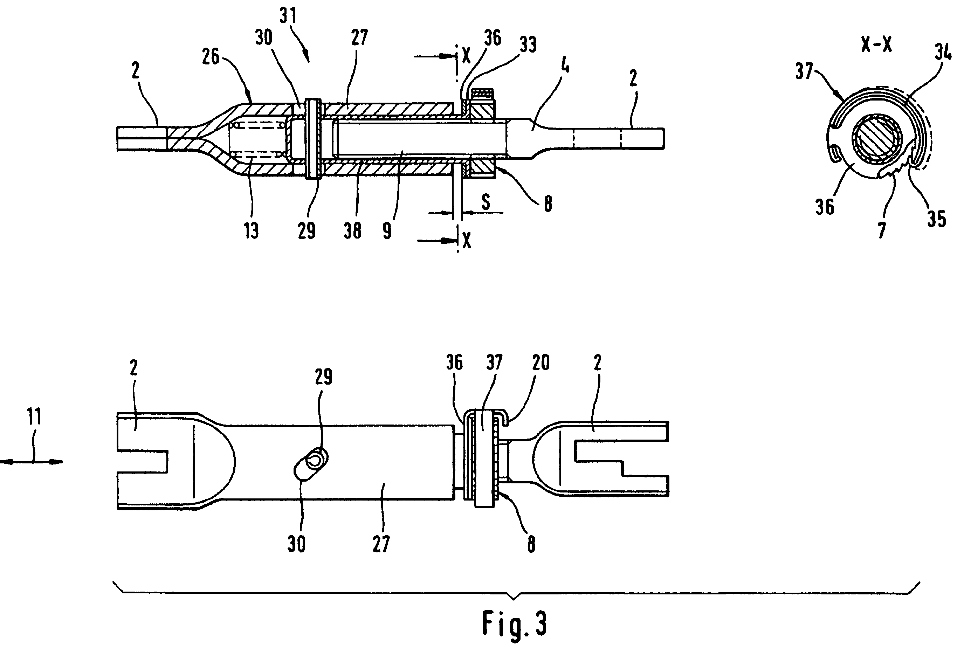

Figur 3 zeigt eine Ausführung der Nachstellstrebe 31, die im Unterschied zur Ausführung nach Figur 2 eine innenliegende Hülse 38 als Bestandteil des Stellelementes aufweist. Die Hülse 38 umgibt damit den Gewindestange 9 des ersten Strebenteiles 4 und ist gleichzeitig innerhalb des Rohrabschnitts 27 des zweiten Strebenteiles 26 angeordnet. An einem Ende ist die Hülse 38 über die im Rohrabschnitt 27 innenliegende Feder 13 am zweiten Strebenteil 26 abgestützt. Am gegenüberliegenden Ende ist an die Hülse 38 ein Kragen 33 angeformt, der am Zahnrad 8 abgestützt ist. Am Kragen 33 ist eine Scheibe 36 befestigt, beispielsweise mittels Schweißen, Kleben, Löten oder ähnlichem, an die einstückig ein Stellarm 37 mit Klinke 35 angeformt ist. Der Stellarm 37 ist zumindest teilweise um das Zahnrad 8 herumgeführt und benötigt demzufolge sehr wenig Bauraum. Damit ist der mit dem Zahnrad 8 zusammenwirkende Stellarm 37 insbesondere an die Drehbewegung der Hülse 38 gekoppelt. Figur 3 zeigt dabei die Nachstellstrebe 31 bei Normaltemperatur, bei der die Klinke 35 sich in Eingriff mit der Außenverzahnung 7 des Zahnrades 8 befindet. Allgemein erfolgt die Übertragung der Relativverschiebung zwischen den Strebenteilen 4, 26 in eine Drehbewegung des Stellarms 37 analog zur Ausführung nach Figur 2 mittels eines eine der Hülse befestigten Führungsstiftes 29. Mit seinen Endabschnitten ist der Führungsstift 29 entsprechend in einer Kulissenführung 30 gelagert, die beispielsweise als schräg zur Verlängerungsrichtung 11 verlaufendes Langloch 30 ausgebildet ist. Bei einer Relativverschiebung zwischen den Strebenteilen 4, 26 um den Betätigungshub S wird der Führungsstift 29 durch die Kraft der Feder 13 innerhalb der Kulissenführung 30 verschoben. Dies bewirkt eine Drehung der Hülse 38, die mittels des fest verbundenen Stellarmes 37 sowie der Klinke 35 das Zahnrad 8 mitnimmt. Eine große Relativverschiebung der Strebenteile 4, 26 beispielsweise infolge hohen bzw. fortschreitenden Reibbelagverschleißes resultiert damit in einer Nachstellung durch Drehung des Zahnrades 8 auf dem Gewindestange 9.

Dabei wird die Nachstellstrebe 31 insgesamt mittels einer an den Stellarm 37 angeformten abgewinkelten Lasche 20 in Verlängerungsrichtung 11 zusammengehalten, da die Lasche 20 das Zahnrad 8 hintergreift. Die Nachstellstrebe 31 ist somit als separate Baueinheit eigenständig handhabbar, was sich insbesondere bei der Montage als vorteilhaft erweist.

Die Nachstellstrebe 31 nach Figur 3 umfasst weiterhin eine temperaturabhängige Abschaltvorrichtung für die Nachstellfunktion. Diese weist ein temperaturabhängig wirksames, streifenförmiges Thermoelement 34 auf, das vorteilhaft in den Stellarm 37 integriert ist. Insbesondere ist das Thermo-element 34 innenliegend am Stellarm 37 angeordnet. Bei einer Temperaturerhöhung, beispielweise aufgrund sehr hoher umgesetzter Bremsleistungen in der Trommelbremse, verformt sich das Thermoelement 34 und entfernt damit den Stellarm 37 vom Zahnrad 8, wie auch mit gestrichelter Linienführung in Figur 3 angedeutet. Gleichzeitig wird die Klinke 35 bei überschreiten einer vorbestimmten Temperaturschwelle außer Eingriff mit der Außenverzahnung 7 des Zahnrades 8 gebracht. In einem solchen Zustand hoher Temperatur kann also eine mögliche Drehbewegung des Stellarmes 37 nicht mehr auf das Zahnrad 8 übertragen werden. Die Nachstellvorrichtung kann demnach bei hohen Temperaturen nicht nachstellen. Erst bei unterschreiten der Temperaturschwelle nähert sich der Stellarm 37 wider dem Zahnrad 8 und die Klinke 35 greift wieder in die Außenverzahnung 7 ein. Ein derartiges Thermoelement 34 kann beispielsweise aus Bimetall oder einer entsprechend wirksamen Form-Gedächtnis-Legierung gefertigt sein. Außerdem ist es möglich das Thermoelement 34 aus einem Werkstoff mit deutlich höherem Wärmeausdehnungskoeffizienten gegenüber dem sonstigen Material des Stellarms 37 auszubilden. Dies ermöglicht die Verwendung von Bauteilen aus sehr kostengünstigem Material. Beispielsweise kann der Stellarm 37 aus Stahlblech und das Thermoelement 34 aus Zinkblech bestehen.

## Patentansprüche

1. Eigenständig handhabbare Nachstellvorrichtung einer Trommelbremse umfassend eine verlängerbare Nachstellstrebe (1, 21, 31), mit einem ersten Strebenteil (4), das eine Gewindestange (9) mit einem drehbar daran angeordneten Zahnrad (8) aufweist, mit einem zweiten Strebenteil (5, 26), das verschiebbar zum ersten Strebenteil (4) angeordneten ist und mittels einer Feder (13) gegenüber diesem verspannt ist, mit einem mit dem Zahnrad (8) zusammenwirkenden Stellelement (6, 14, 15, 28, 35-38), das schwenkbar an zumindest einem Strebenteil (4, 5, 26) gelagert ist, wobei die Schwenkbewegung des Stellelementes (6, 14, 15, 28, 35-38) an die Relativverschiebung zwischen den Strebenteilen (4, 5, 26) gekoppelt ist, **dadurch gekennzeichnet, dass** das Stellelement (6, 14, 15) an einem Stift (12) gelagert ist, der in einem die beiden Strebenteile (4, 5) abschnittsweise in seinem Innern aufnehmenden Rohr (10) befestigt ist.

2. Eigenständig handhabbare Nachstellvorrichtung einer Trommelbremse umfassend eine verlängerbare Nachstellstrebe (1, 21, 31), mit einem ersten Strebenteil (4), das eine Gewindestange (9) mit einem drehbar daran angeordneten Zahnrad (8) aufweist, mit einem zweiten Strebenteil (5, 26), das verschiebbar zum ersten Strebenteil (4) angeordneten ist und mittels einer Feder (13) gegenüber diesem verspannt ist, mit einem mit dem Zahnrad (8) zusammenwirkenden Stellelement (6, 14, 15, 28, 35-38), das schwenkbar an zumindest einem Strebenteil (4, 5, 26) gelagert ist, wobei die Schwenkbewegung des Stellelementes (6, 14, 15, 28, 35-38) an die Relativverschiebung zwischen den Strebenteilen (4, 5, 26) gekoppelt ist, **dadurch gekennzeichnet, dass** das Stellelement (28, 35-38) eine zumindest ein Strebenteil (4, 26) abschnittsweise umgebende Hülse (28, 38) aufweist, die mittels eines an der Hülse (28, 38) befestigten Stiftes (29) in einer Kulissenführung (30) eines der Strebenteile (4, 26) geführt ist.

3. Nachstellvorrichtung nach Anspruch 2, **dadurch gekennzeichnet, dass** das Stellelement (28, 35-38) einen an der Hülse (28, 38) befestigten Hebel (14) aufweist, der in das Zahnrad (8) eingreift.

4. Nachstellvorrichtung nach Anspruch 2, **dadurch gekennzeichnet, dass** das Stellelement (28, 35-38) einen das Zahnrad (8) zumindest teilweise an seinem Umfang umgebenden Arm (37) aufweist, der mit einer Klinke (35) in das Zahnrad (8) eingreift.

5. Nachstellvorrichtung nach einem der vorhergehenden Ansprüche, **dadurch gekennzeichnet, dass** das Stellelement (6, 14, 15, 28, 35-38) mit einer Lasche (20) das Zahnrad (8) umgreift, um die Relativverschiebung zwischen den Strebenteilen (4, 5, 26) zu begrenzen.

6. Nachstellvorrichtung nach einem der vorhergehenden Ansprüche, **dadurch gekennzeichnet, dass** in die Nachstellstrebe (1, 21, 31) eine thermische Abschaltvorrichtung (22, 23, 34) integriert ist, die bei Überschreiten einer vorbestimmten Temperaturgrenze eine Verlängerung der Nachstellstrebe (1, 21, 31) verhindert.

7. Nachstellvorrichtung nach Anspruch 6, **dadurch gekennzeichnet, dass** die thermische Abschaltvorrichtung (22, 23, 34) ein temperaturabhängig wirksames Thermoelement (23, 34) umfasst.

8. Nachstellvorrichtung nach Anspruch 6, **dadurch gekennzeichnet, dass** das Thermoelement (34) in das mit dem Zahnrad (8) zusammenwirkende Stellelement (34-38) integriert ist.

## Claims

1. Independently operable adjusting device of a drum brake comprising an extensible adjusting strut (1, 21, 31), with a first strut part (4) which includes a threaded rod (9) with a gear wheel (8) rotatably arranged thereon, with a second strut part (5, 26) being arranged so as to be displaceable in relation to the first strut part (4) and being compressed in relation to it by means of a spring (13), with a control element (6, 14, 15, 28, 35-38) cooperating with the gear wheel (8) and being pivotally mounted on at least one strut part (4, 5, 26), with the pivoting movement of the control element (6, 14, 15, 28, 35-38) being coupled to the relative displacement between the strut parts (4, 5, 26),
**characterized in that** the control element (6, 14, 15) is mounted on a pin (12) which is attached in a tube (10) housing sections of the two strut parts (4, 5) in its interior.

2. Independently operable adjusting device of a drum brake comprising an extensible adjusting strut (1, 21, 31), with a first strut part (4) which includes a threaded rod (9) with a gear wheel (8) rotatably arranged thereon, with a second strut part (5, 26) being arranged so as to be displaceable in relation to the first strut part (4) and being compressed in relation to it by means of a spring (13), with a control element (6, 14, 15, 28, 35-38) cooperating with the gear wheel (8) and being pivotally mounted on at least one strut part (4, 5, 26), with the pivoting movement of the control element (6, 14, 15, 28, 35-38) being coupled to the relative displacement between the strut parts (4, 5, 26),
**characterized in that** the control element (28, 35-38) includes a sleeve (28, 38) encompassing in sections at least one strut part (4, 26) and being guided in a coulisse-type guide (30) of one of the strut parts (4, 26) by means of a pin (29) attached to the sleeve (28, 38).

3. Adjusting device as claimed in claim 2,
**characterized in that** the control element (28, 35-38) includes a lever (14) that is attached to the sleeve (28, 38) and engages into the gear wheel (8).

4. Adjusting device as claimed in claim 2,
**characterized in that** the control element (28, 35-38) includes an arm (37) encompassing the gear wheel (8) at least partly at its periphery and engaging with a catch (35) into the gear wheel (8).

5. Adjusting device as claimed in any one of the preceding claims,
**characterized in that** the control element (6, 14, 15, 28, 35-38) embraces the gear wheel (8) with a lug (20) in order to limit the relative displacement between the strut parts (4, 5, 26).

6. Adjusting device as claimed in any one of the preceding claims,
**characterized in that** a thermal disabling device (22, 23, 34) is integrated in the adjusting strut (1, 21, 31) and prevents an extension of the adjusting strut (1, 21, 31) when a predetermined temperature limit is exceeded.

7. Adjusting device as claimed in claim 6,
**characterized in that** the thermal disabling device (22, 23, 34) comprises a temperature-responsively acting thermo-element (23, 34).

8. Adjusting device as claimed in claim 6,
**characterized in that** the thermo-element (34) is integrated into the control element (34-38) cooperating with the gear wheel (8).

## Revendications

1. Dispositif de rajustage opérable de manière indépendante d'un frein à tambour, comportant une jambe de réglage (1, 21, 31) rallongeable avec une partie-jambe (4) première prévue d'une barre filetée (9) avec une roue à denture (8) disposée à la dernière de manière tournante, avec une partie-jambe (5, 26) secondaire disposée de manière décalable vis-à-vis la partie (4) première et étant voilé vis-à-vis laquelle par l'intermédiaire d'un ressort (13), avec un élément d'ajustage (6, 14, 15, 28, 35-38) coopérant avec la roue à denture(8), l'élément d'ajustage étant disposé de manière pivotante au moins sur l'une des parties (4, 5, 26), le mouvement oscillant de l'élément d'ajustage (6, 14, 15, 28, 35-38) étant lié au mouvement relatif entre les parties (4, 5, 26), **caractérisé en ce que** l'élément d'ajustage (6, 14, 15) est disposé sur une cheville (12) fixée dans un tuyau (10) accueillant dans son intérieur, section par section, les deux parties (4, 5).

2. Dispositif de rajustage opérable de manière indépendante d'un frein à tambour comportant une jambe de réglage (1, 21, 31) rallongeable, avec une partie-jambe (4) première prévue d'une barre filetée (9), avec une roue à denture (8) disposée à la dernière de manière tournante, avec une partie-jambe (5, 26) secondaire disposée de manière décalable vis-à-vis la partie (4) première et étant voilé vis-à-vis laquelle par l'intermédiaire d'un ressort, avec un élément d'ajustage (6, 14, 15, 28, 35-38) coopérant avec la roue à denture, l'élément d'ajustage étant disposé de manière pivotante au moins sur l'une partie (4, 5, 26), le mouvement oscillant de l'élément d'ajustage (6, 14, 15, 28, 35-38) étant lié au mouvement relatif entre les parties (4, 5, 26), **caractérisé en ce que** l'élément d'ajustage (28, 35-38) est prévu d'un manchon (28, 38) entourant au moins une partie (4, 26) section par section, le manchon étant guidée par l'intermédiaire d'une cheville (29) fixée au manchon (28, 38) dans une guide de coulisse (30) de l'une des parties (4, 26).

3. Dispositif de rajustage selon la revendication 2, **caractérisé en ce que** l'élément d'ajustage (28, 35-38) est prévu d'un levier (14) fixé au manchon (28, 38), levier s'engrenant la roue à denture (8).

4. Dispositif de rajustage selon la revendication 2, **caractérisé en ce que** l'élément d'ajustage (28, 35-38) est prévu d'un bras de levier (37) entourant au moins en partie périphérique la roue à denture (8), le bras de levier attaquant la roue à denture par l'intermédiaire d'un cliquet.

5. Dispositif de rajustage selon l'une des revendications précédentes, **caractérisé en ce que** l'élément d'ajustage (6, 14, 15, 28, 35-38) entoure la roue à denture (8) par l'intermédiaire d'une languette (20) pour limiter le mouvement relatif entre les parties (4, 5, 26).

6. Dispositif de rajustage selon l'une des revendications précédentes, **caractérisé en ce qu'**un mécanisme de coupure (22, 23, 34) thermique est intégré dans la jambe de réglage (1, 21, 31), le mécanisme de coupure d'ajustage (28, 35-38) empêchant la jambe de réglage (1, 21, 31) de se rallonger au cas de dépassement d'une température prédéterminée.

7. Dispositif de rajustage selon la revendication 6, **caractérisé en ce que** le mécanisme de coupure (22, 23, 34) comporte un thermocouple (23, 34) répondant aux changes en température.

8. Dispositif de rajustage selon la revendication 6, **caractérisé en ce que** le thermocouple (34) est intégré dans l'élément de réglage (34-38) coopérant avec la roue à denture (8).
